# EUROPÄISCHE PATENTANMELDUNG

(11) **EP 3 434 164 A1**
(43) Veröffentlichungstag der Anmeldung: **30.01.2019**
(21) Anmeldenummer: 17207621.8
(22) Anmeldetag: 15.12.2017
(51) Int. Cl.: A47L 1/16

(54) **TRAGBARER ELEKTRISCH BEHEIZBARER EISKRATZER**

(30) Priorität: 28.07.2017 DE 102017117106
(71) Anmelder: Xin Feng Electrical Co., Ltd., 528415 Zhongshan Guangdong (CN)
(72) Erfinder: Niehaus, Knut, 21423 Winsen (Luhe) (DE)
(74) Vertreter: Herrmann, Uwe

(57) **Zusammenfassung**

Die Erfindung stellt einen tragbaren elektrisch beheizbaren Eiskratzer (1) bereit, mit einem länglich ausgebildeten Gehäuse (2), das einen vorderen Gehäuseabschnitt (3) mit einem Gehäusevorderende (5) und einer dort angeordneten Kratzkante (7) und einen einen Griff (8) umfassenden hinteren Gehäuseabschnitt (4) mit einem Gehäusehinterende (6) umfasst, wobei in dem Gehäuse (2) ein elektrisch betriebener Lüfter (9) zum Erzeugen eines Luftstroms in Richtung der Kratzkante (7) und mindestens ein elektrisch betriebenes Heizelement (10) zum Erwärmen des Luftstroms angeordnet sind, und wobei der vordere Gehäuseabschnitt (3) und der hintere Gehäuseabschnitt (4) sich in Gehäuselängsrichtung im Wesentlichen in einer Ebene erstrecken oder der vordere Gehäuseabschnitt (3) gegenüber dem hinteren Gehäuseabschnitt (4) in Gehäuselängsrichtung in einem Winkel von nicht mehr als 35° abgewinkelt ist..

## Beschreibung

Die Erfindung betrifft einen tragbaren elektrisch beheizbaren Eiskratzer.

Es ist lange bekannt, Eiskratzer zum Entfernen von Eis zu verwenden, das sich beispielsweise im Winter auf Windschutzscheiben von Fahrzeugen gebildet hat. Je nach Dicke der gebildeten Eisschicht kann die Entfernung einer Eisschicht mittels rein mechanischer Eiskratzer körperlich anstrengend, aufwändig und schwierig sein. Es sind daher beispielsweise aus der DE 10052281 C2, DE 202006000830 U1 oder US 3711679 A auch Eiskratzer bekannt geworden, bei denen mit Hilfe elektrisch betriebener Heizelemente, die zum Beispiel in der Kratzkante vorgesehen sein können, das Eis erwärmt und geschmolzen werden soll. Darüber hinaus sind in der DE 2927887 A1, DE 4300500 A1, GB 2295006 A und der GB 2328734 A US 2006/0282980 A1 auch Vorrichtungen beschrieben, bei denen das Eis mittels Warmluft geschmolzen wird. Hierbei handelt es sich in der Regel um vergleichsweise klobige Geräte nach Art einer Heißluftpistole. Bei einer in der US 2006/0282980 A1 beschriebenen Vorrichtung soll ein rotierendes Messer Eis etc. von der Scheibe lösen, und ein Lüfter dient dazu, das gelöste Eis mittels Kaltluft zu entfernen.

Aufgabe der vorliegenden Erfindung ist es, einen elektrisch beheizbaren Eiskratzer bereit zu stellen, der leicht handhabbar und einfach zu bedienen ist, und mit dessen Hilfe Eis zuverlässig und mit möglichst geringem physischem Aufwand von beispielsweise Windschutzscheiben entfernt werden kann.

Gelöst wird die Aufgabe durch einen tragbaren elektrisch beheizbaren Eiskratzer mit einem länglich ausgebildeten Gehäuse, das einen vorderen Gehäuseabschnitt mit einem Gehäusevorderende und einer dort angeordneten Kratzkante und einen einen Griff umfassenden hinteren Gehäuseabschnitt mit einem Gehäusehinterende umfasst, wobei in dem Gehäuse ein elektrisch betriebener Lüfter zum Erzeugen eines Luftstroms in Richtung der Kratzkante und mindestens ein elektrisch betriebenes Heizelement zum Erwärmen des Luftstroms angeordnet sind, und wobei der vordere Gehäuseabschnitt und der hintere Gehäuseabschnitt sich in Gehäuselängsrichtung im Wesentlichen in einer Ebene erstrecken oder der vordere Gehäuseabschnitt gegenüber dem hinteren Gehäuseabschnitt in Gehäuselängsrichtung in einem Winkel von nicht mehr als 35° abgewinkelt ist.

Der erfindungsgemäße Eiskratzer hat die allgemeine Form bekannter mechanischer Eiskratzer mit einer vorderen Kratzkante und einem hinten gelegenen Griff, wobei der Eiskratzer ein zur Aufnahme der nötigen elektronischen Bauteile einschließlich des Lüfters ausgebildetes Gehäuse aufweist. Trotz Aufnahme der elektronischen Bauteile ist das Gehäuse des erfindungsgemäßen Eiskratzers vorzugsweise vergleichsweise flach ausgebildet und weist keinen Pistolengriff auf, so dass er nach Art der bekannten mechanischen Eiskratzer eingesetzt werden kann. Dadurch, dass der hintere Gehäuseabschnitt mit dem Griff und der vordere Gehäuseabschnitt mit der Kratzkante im Wesentlichen in einer Ebene liegen bzw. der vordere Gehäuseabschnitt mit der Kratzkante gegenüber dem hinteren Gehäuseabschnitt in Gehäuselängsrichtung vergleichsweise wenig zur Gehäuseunterseite bzw. zur Kratzkante abgewinkelt ist, kann mit dem Eiskratzer ein gegebenenfalls erforderlicher Anpressdruck viel leichter erzeugt werden als beispielsweise mit einem Pistolengriff. Außerdem ergibt sich dadurch ein kompakteres Design, so dass das Gerät einfacher verstaut werden kann. Ein innerhalb des Gehäuses angeordneter elektrisch betriebener Lüfter erzeugt einen Luftstrom, der mit Hilfe von mindestens einem elektrisch betriebenen Heizelement erwärmt und in Richtung Kratzkante geführt wird. Eis auf beispielsweise einer Windschutzscheibe kann so erwärmt und zumindest angeschmolzen werden, so dass es mittels der Kratzkante leicht von der Windschutzscheibe entfernt werden kann.

Der Begriff "flach" in Bezug auf das Gehäuse bedeutet, dass das Gehäuse im Verhältnis zu seiner Länge eine vergleichsweise geringe Höhe aufweist.

Der Begriff "elektrisch beheizbarer Eiskratzer" bezeichnet hier einen Eiskratzer, bei dem elektrisch erzeugte Wärme zumindest unterstützend genutzt werden kann, um Eis von beispielsweise einer Windschutzscheibe zu entfernen.

Der Ausdruck, wonach der hintere Gehäuseabschnitt einen Griff umfasst, bedeutet, dass der hintere Gehäuseabschnitt zumindest in einem Teilbereich so geformt ist, dass er von einer menschlichen Hand leicht umgriffen werden kann. Der Ausdruck schließt ein, dass der hintere Gehäuseabschnitt als Griff ausgebildet ist, der hintere Gehäuseabschnitt somit den Griff des Eiskratzers bildet.

Der Ausdruck, wonach "der vordere Gehäuseabschnitt und der hintere Gehäuseabschnitt sich in Gehäuselängsrichtung im Wesentlichen in einer Ebene erstrecken oder der vordere Gehäuseabschnitt gegenüber dem hinteren Gehäuseabschnitt in Gehäuselängsrichtung in einem Winkel von nicht mehr als 35° abgewinkelt ist", bedeutet, dass der vordere und hintere Gehäuseabschnitt des erfindungsgemäßen Eiskratzers nicht oder nicht stark gegeneinander abgewinkelt sind und der hintere Gehäuseabschnitt insbesondere keinen Pistolengriff bildet. "Abgewinkelt" bedeutet hier nicht, dass eine Knickkante oder dergleichen vorhanden sein muss. Vielmehr kann der vordere Gehäuseabschnitt auch eine entsprechende Krümmung aufweisen. Eine Abwinkelung des vorderen Gehäuseabschnitts führt dazu, dass die Kratzkante unterhalb der Ebene des hinteren Gehäuseabschnitts angeordnet ist, so dass es nicht erforderlich ist, den Eiskratzer gegenüber der Ebene der Windschutzscheibe stark anzuwinkeln. Vielmehr kann der Eiskratzer mit seinem Griff im Wesentlichen parallel zur Windschutzscheibe geführt werden.

In einer bevorzugten Ausführungsform des erfindungsgemäßen Eiskratzers ist der vordere Gehäuseabschnitt gegenüber dem hinteren Gehäuseabschnitt in einem Winkel von nicht mehr als 30°, bevorzugt nicht mehr als 25° oder 20°, besonders bevorzugt nicht mehr als 15° abgewinkelt.

In einer weiteren bevorzugten Ausführungsform des erfindungsgemäßen Eiskratzers erweitert sich der vordere Gehäuseabschnitt in Richtung quer zur Gehäuselängsrichtung zur Kratzkante hin. Beispielsweise kann sich der vordere Gehäuseabschnitt in Richtung Kratzkante konisch erweitern, um so eine möglichst breite Kratzkante zu bieten und in einem Arbeitsgang einen möglichst breiten Streifen einer Windschutzscheibe von Eis befreien zu können.

Das Gehäuse des erfindungsgemäßen Eiskratzers ist vorzugsweise flach ausgebildet. Besonders bevorzugt beträgt das Verhältnis der gesamten Gehäuselänge zur Gehäusehöhe im Bereich des hinteren Gehäuseabschnitts ≥5, bevorzugt ≥6, ≥7, ≥8 oder ≥9. Das Verhältnis kann beispielsweise etwa 10, 11 oder 12 betragen. Bei längeren Ausgestaltungen kann das Verhältnis beispielsweise aber auch größer sein. Beispielsweise kann ein erfindungsgemäßer Eiskratzer eine Gehäuselänge von etwa 240 mm bei einer Gehäusehöhe im Bereich des hinteren Gehäuseabschnitts von etwa 22 mm aufweisen. Das Gehäuse kann beispielsweise aus einem duroplastischen Kunststoff, aber auch aus anderen Materialien oder Materialgemischen bestehen, z.B. aus Metall oder einem Faser-Verbundwerkstoff. Das Gehäuse kann aus einem oberen und unteren Gehäuseteil bestehen, die beispielsweise durch Schnappverbindungen oder durch Schrauben oder dergleichen miteinander verbunden werden können. Die beiden Gehäuseteile können jeweils einstückig ausgebildet sein. Das Gehäuse kann aber auch aus mehr als zwei Komponenten bestehen. Insbesondere im Falle von nicht wiederaufladbaren Batterien kann ein Batteriegehäusedeckel im Gehäuse vorgesehen sein.

Die Kratzkante des erfindungsgemäßen Eiskratzers weist vorzugsweise eine Mehrzahl von Lüftungskanälen zur Ableitung Luftstroms auf. Es kann sich dabei um Öffnungen oder Schlitze in der Kratzkante oder im Bereich der Kratzkante handeln, durch die der vom Lüfter erzeugte und mittels des mindestens einen Heizelements aufgewärmte Luftstrom aus dem Gehäuse abgeführt beziehungsweise auf die Windschutzscheibe geleitet werden kann. Die Kratzkante kann beispielsweise aus einem duroplastischen Kunststoff, Metall oder einem anderen geeigneten Material bestehen.

Bei dem Lüfter handelt es sich vorzugsweise um einen Radiallüfter, der bevorzugt liegend mit dem Austrittsstutzen in Richtung Kratzkante angeordnet ist.

Das mindestens eine Heizelement ist zwischen Lüfter und Kratzkante im Luftstrom angeordnet, so dass der Luftstrom auf dem Weg zur Kratzkante aufgewärmt wird. Bei dem mindestens einen Heizelement handelt es sich vorzugsweise um ein "Positive-Temperature-Coefficient"-Heizelement (PTC-Heizelement). Bevorzugt ist eine Mehrzahl von PTC-Heizelementen vorgesehen. Das oder die Heizelemente und deren Anordnung werden so gewählt, dass an der Kratzkante eine ausreichende Temperatur erzeugt wird, beispielsweise eine Temperatur von 60-70°C. Die Heizelemente können hierzu beispielsweise eine Temperartur 195 °C erzeugen. Selbstverständlich können je nach Einsatzzweck auch geringere oder höhere Temperaturen erzeugt werden.

In einer besonders bevorzugten Ausführungsform der Erfindung sind der Lüfter und das mindestens eine Heizelement vorzugsweise mit mindestens einer in dem Gehäuse angeordneten Batterie elektrisch verbunden, so dass der Lüfter und das mindestens eine Heizelement mittels in der Batterie gespeicherter elektrischer Energie betrieben werden können. Der Begriff "Batterie" umfasst hier sowohl nicht-aufladbare als auch aufladbare Batterien (Akkumulatoren). Neben dem Lüfter und dem mindestens einen Heizelement sind vorzugsweise auch andere in dem Gehäuse untergebrachte elektronische Komponenten, beispielsweise ein Ein-/AusSchalter, eine Steuerungselektronik, LEDs etc. mit der Batterie verbunden bzw. an die Batterie angeschlossen.

Der Lüfter und das mindestens eine Heizelement können aber alternativ oder gegebenenfalls auch zusätzlich zur mindestens einen Batterie mit einem Kabel elektrisch verbunden sein, das mittels eines Steckers an eine Bordspannungssteckdose eines Kraftfahrzeuges, beispielsweise einen 12V-Spannungsanschluss, anschließbar ist. Eine derartige Ausführungsform des erfindungsgemäßen Eiskratzers kann über das Kabel, das vorzugsweise eine geeignete Länge aufweist, direkt an die Bordspannungssteckdose beispielsweise eines Kraftfahrzeuges angeschlossen und darüber betrieben werden. Gegebenenfalls kann auch lediglich vorgesehen sein, dass eine wiederaufladbare Batterie mittels des Kabels über die Bordspannungssteckdose wieder aufgeladen werden kann.

In einer bevorzugten Ausführungsform ist in dem Gehäuse des erfindungsgemäßen Eiskratzers eine Steuerelektronik zur elektronischen Steuerung des Lüfters und/oder des mindestens einen Heizelements angeordnet. Die Steuerelektronik kann beispielsweise die Heizleistung des mindestens einen Heizelements oder den Lüfter in Abhängigkeit von der Temperatur des mindestens einen Heizelements steuern. Die Steuerelektronik kann beispielsweise so eingerichtet sein, dass der Lüfter erst angeschaltet wird, wenn das mindestens eine Heizelement eine vorgewählte Temperatur, beispielsweise 150 °C, erreicht hat.

Zur gezielteren Führung des Luftstroms zur Kratzkante kann in dem Gehäuse eine geeignete Führungseinrichtung vorhanden sein. Es kann sich hier beispielsweise um ein oder mehrere Kunststoff- oder Metallprofile handeln, die, beginnend am Austrittsstutzen des Lüfters sich in Richtung Kratzkante erstrecken und den Luftstrom aufnehmen und räumlich begrenzen. Beispielsweise kann ein sich zur Kratzkante konisch erweiterndes Kunststoff- oder Metallprofil mit Seitenwänden und gegebenenfalls weiteren Leitwänden im vorderen Gehäuseabschnitt angeordnet sein. Vorzugsweise weist das Kunststoff- oder Metallprofil auch eine Tragstruktur zur Lagerung des mindestens einen Heizelements auf. Das Material der Führungseinrichtung wird auch in Abhängigkeit von der durch das Heizelement erzeugten Temperatur und damit der Temperatur des Luftstroms gewählt. Das Material ist hierzu vorzugsweise ausreichend hitzeresistent. Im Falle eines gut wärmeleitenden Materials wie Metall kann es vorteilhaft sein, eine Isolierschicht um die Führungseinrichtung vorzusehen, um ein unerwünschtes Aufheizen der äußeren Flächen des Eiskratzers zu verhindern.

Um dem Eindringen von Wasser, das durch das Schmelzen von Eis gebildet wird, in das Gehäuseinnere des erfindungsgemäßen Eiskratzers vorzubeugen, ist in dem Gehäuse zwischen dem mindestens einen Heizelement und der Kratzkante eine Barriere gegen von der Kratzkante aus eindringendes Wasser angeordnet. Es kann sich um eine Kunststoffbarriere handeln, die sich über den Querschnitt des vorderen Gehäuseabschnitts erstreckt. Die Kunststoffbarriere ist dabei so ausgestaltet, z.B. nur so hoch, dass der Gehäusequerschnitt in diesem Bereich nur soweit ausgefüllt ist, so dass zumindest die bei normalem Betrieb zu erwartende Menge Wasser im Wesentlichen nicht weiter in das Gehäuseinnere eindringen, der warme Luftstrom aber nach wie vor zur Kratzkante gelangen kann.

Vorzugsweise ist bei dem erfindungsgemäßen Eiskratzer eine Anzeigeeinrichtung vorgesehen, die anzeigt, ob das mindestens eine Heizelement eine ausreichende Temperatur erreicht hat. Es kann sich beispielsweise um eine auf der Gehäuseoberseite angeordnete LED handeln, die bei ausreichender Temperatur an- oder ausgeht. Bevorzugt umfasst die Anzeigeeinrichtung auch eine Anzeige, die anzeigt, ob der Eiskratzer ein- oder ausgeschaltet bzw. ausreichend mit Spannung versorgt ist oder nicht. Auch hierzu kann eine LED vorgesehen sein, die vorzugweise Licht einer anderen Farbe abgibt als die LED zur Anzeige einer ausreichenden Heizelement-Temperatur. Ein unterschiedlicher Farbeindruck kann beispielsweise aber auch durch unterschiedlich gefärbte transparente Abdeckungen der LEDs erzeugt werden. Die Anzeigeeinrichtung kann auch beispielsweise eine Anzeige des Betriebszustandes des Lüfters umfassen, so dass gegebenenfalls von außen erkennbar ist, ob der Lüfter läuft oder nicht.

In einer bevorzugten Ausführungsform des erfindungsgemäßen Eiskratzers ist die Kratzkante lösbar mit dem vorderen Gehäuseabschnitt verbunden. Die Kratzkante ist bei dieser Ausführungsform somit abnehmbar und kann, beispielsweise bei Verschleiß, gegen eine andere Kratzkante ausgetauscht werden. Selbstverständlich ist es auf diese Weise auch möglich, den Eiskratzer mit verschiedenen Kratzkanten, z.B. aus unterschiedlichen Materialien oder mit unterschiedlichen Gestaltungen, an dem Eiskratzer anzubringen.

Der Eiskratzer kann vorzugsweise über einen in geeigneter Weise, beispielsweise an der Gehäuseseite angebrachten Schalter betätigt werden. Zum Aufladen der wiederaufladbaren Batterie(n) kann ein entsprechender Anschluss vorgesehen sein. Es ist selbstverständlich auch möglich, in das Gehäuse noch eine Beleuchtungseinrichtung zu integrieren, um gegebenenfalls das Arbeitsfeld beleuchten zu können.

Die Erfindung wird im Folgenden rein zu Veranschaulichungszwecken anhand eines Ausführungsbeispiels näher beschrieben.
Figur 1 Schräge Draufsicht auf eine Ausführungsform eines erfindungsgemäßen Eiskratzers. A. Ansicht bei entfernter Gehäuseoberseite. B. Ansicht mit Gehäuseoberseite.
Figur 2 Explosionszeichnung der in Figur 1 dargestellten Ausführungsform eines erfindungsgemäßen Eiskratzers.
Figur 3 Draufsicht (A), seitliche Schnittansicht (B) und Untersicht (C) auf die in Figur 1 dargestellte Ausführungsform eines erfindungsgemäßen Eiskratzers.
Figur 4 Seitliche Schnittansicht (s. Fig. 3B) der in Figur 1 dargestellten Ausführungsform eines erfindungsgemäßen Eiskratzers.
Figur 5 Explosionszeichnung einer weiteren Ausführungsform eines erfindungsgemäßen Eiskratzers.

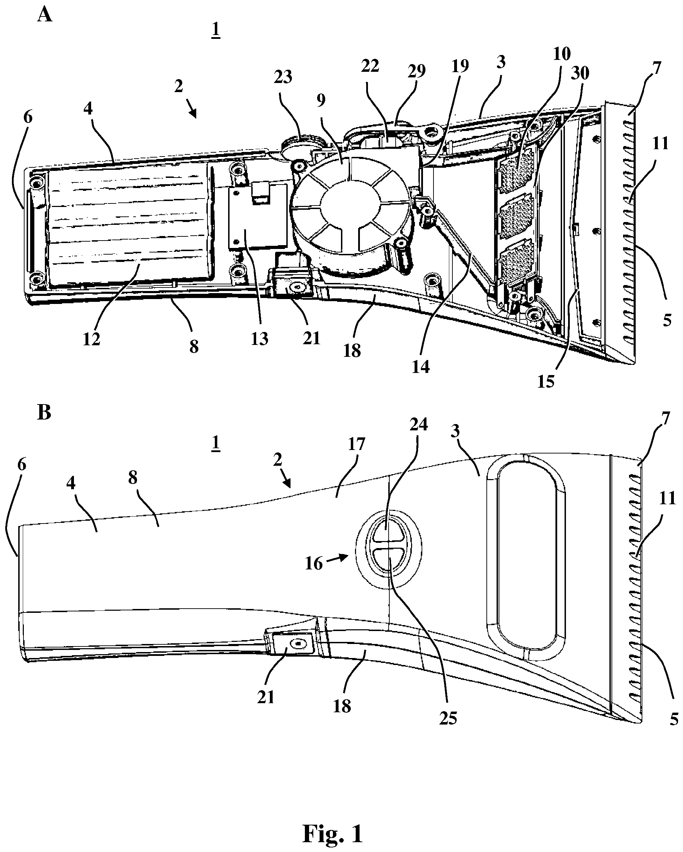

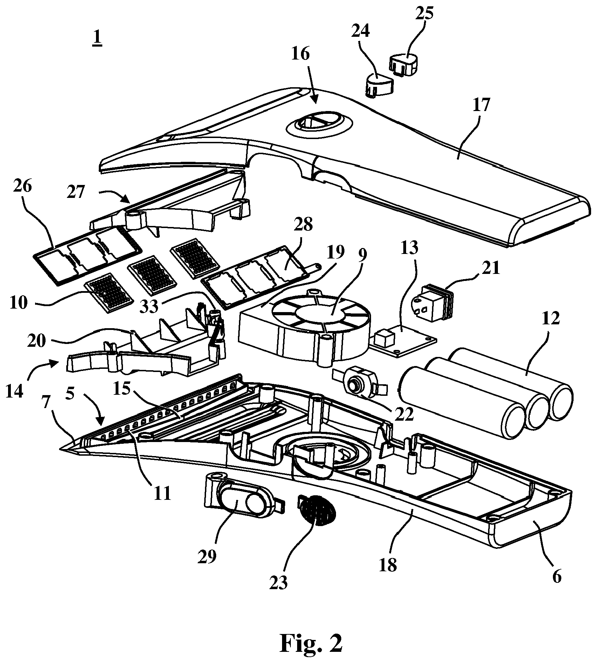

In Figur 1 ist eine bevorzugte Ausführungsform eines erfindungsgemäßen Eiskratzers 1 in einer schrägen Draufsicht mit und ohne Gehäuseoberseite 17 dargestellt (s. auch Fig. 2). Der Eiskratzer 1 umfasst ein Gehäuse 2, beispielsweise aus einem duroplastischen Kunststoff, mit einem Gehäusevorderende 5, einem Gehäusehinterende 6, einer Gehäuseunterseite 18 und einer Gehäuseoberseite 17. Das Gehäuse 2 umfasst einen vorderen Gehäuseabschnitt 3 mit einer Kratzkante 7 und einen hinteren Gehäuseabschnitt 4, der hier als Griff 8 ausgebildet ist. Der vorderen Gehäuseabschnitt 3 ist zur Kratzkante 7 hin konisch erweitert. Auf der Gehäuseunterseite 18 ist ein Lüfter 9 montiert, der hier als Radiallüfter ausgebildet und für einen möglichst flachen Aufbau liegend montiert ist. Auf der Gehäuseunterseite 18 ist auch eine hier am Austrittsstutzen 19 des Lüfters 8 beginnende und sich in Richtung Kratzkante 7 konisch erweiternde Führungseinrichtung 14 zur Führung des von dem Lüfter 8 erzeugten Luftstroms in Richtung Kratzkante 7 angeordnet. In die als Profil ausgebildete Führungseinrichtung 14 sind auch Auflagen 20 für Heizelemente 10 integriert, die zwischen Lüfter 8 und Kratzkante 7 angeordnet sind. Die Auflagen 20 weisen schräg, beispielsweise in einem Winkel von 45°, verlaufende Auflageflächen auf, auf denen die hier als PTC-Heizelemente ausgebildeten Heizelemente 10 in einem entsprechenden Winkel angeordnet sind. Im Betrieb strömt der vom Lüfter 8 ausgehende und von der Führungseinrichtung 14 geführte Luftstrom über die schräg angeordneten PTC-Heizelemente 10 zur Kratzkante 7. Die PTC-Heizelemente 10 erwärmen den über sie hinweg streichenden Luftstrom, so dass warme bzw. heiße Luft an die Kratzkante 7 gelangt. Der Eiskratzer 1 ist in der hier dargestellten Ausführungsform batteriebetrieben und weist im hinteren Gehäuseabschnitt 4 wiederaufladbare Batterien 12 auf. Über eine Ladebuchse 21 kann ein Ladekabel angeschlossen werden, über das die Batterien 12 beispielsweise über eine KFZ-Bordspannungssteckdose wieder aufgeladen werden können. Der Eiskratzer 1 kann über ein Kabel jedoch auch direkt von der Bordspannungssteckdose mit Strom versorgt und darüber betrieben werden. Eine Steuerelektronik 13 sorgt für eine Steuerung des Lüfters 8 und/oder der Heizelemente 10. Beispielsweise ist die Steuerelektronik 13 so eingerichtet, dass der Lüfter 8 erst eingeschaltet und somit der Luftstrom erst erzeugt wird, nachdem die Heizelement 10 eine ausreichende Temperatur erreicht haben, beispielsweise eine Temperatur von 195 °C. Hierfür ist ein Temperaturfühler 33 mit der Steuerelektronik 13 verbunden, der die Temperatur der Heizelemente 10 misst und an die Steuerelektronik 13 weitergibt. Der Eiskratzer 1 weist einen mittels eines an einer Gehäuseseite befindlichen Betätigungsgliedes 29 manuell betätigbaren Ein-/Ausschalter 22 mit einer Sicherheitsverriegelung 23 auf. In der Gehäuseoberseite 17 ist eine Anzeigeeinrichtung 16 angeordnet, die bei dieser Ausführungsform zwei (in der Darstellung zu dieser Ausführungsform nicht dargestellte) LEDs 31, 32 umfasst, die von transparenten Abdeckungen 24, 25 abgedeckt sind. Eine rote LED 31(unter der Abdeckung 24) zeigt beispielsweise an, ob das Gerät eingeschaltet ist oder die Spannungsversorgung ausreichend ist. Eine grüne LED 32 (unterhalb der Abdeckung 25) zeigt beispielsweise an, ob die Heizelemente 10 eine ausreichend hohe Temperatur erreicht haben und der Eiskratzer 1 einsatzbereit ist.

Figur 2 zeigt eine Explosionszeichnung zu der in Figur 1 dargestellten Ausführungsform des erfindungsgemäßen Eiskratzers 1, so dass auf eine erneute ausführliche Beschreibung an dieser Stelle verzichtet wird. Hinsichtlich der Bedeutung der Bezugsziffern wird zusätzlich auf Figur 1 verwiesen. Aus Figur 2 ist noch ersichtlich, dass die als Profil ausgebildete Führungseinrichtung 14 mit einer ebenfalls als Profil ausgebildeten passenden Abdeckung 27 abgedeckt ist, so dass der Luftstrom sich in einem eigenen geschlossenen Kanal bewegt. Zur Halterung und Spannungsversorgung der PTC-Heizelemente 10 sowie gegebenenfalls zur Datenleitung und/oder Steuerung ist ein Rahmen 30 mit Rahmenteilen 26, 28 vorgesehen.

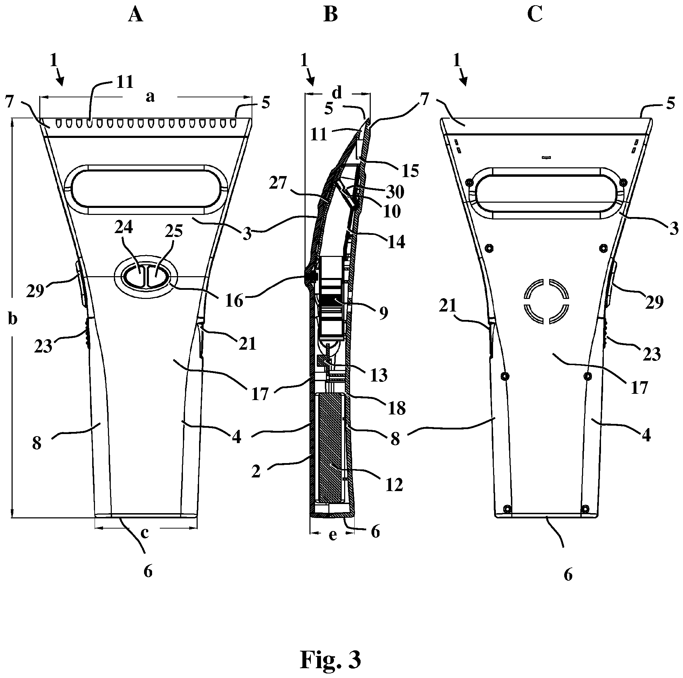

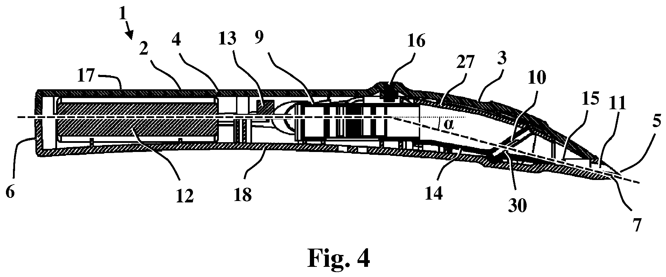

Figur 3 zeigt eine Draufsicht (A), eine seitliche Schnittansicht (B, s. auch Fig. 4) und eine Untersicht (C) auf die in den Figuren 1 und 2 dargestellte Ausführungsform eines erfindungsgemäßen Eiskratzers 1. Auch hier wird hinsichtlich der Bedeutung der verwendeten Bezugsziffern auf Figur 1 verwiesen. Die Schnittansicht (B) ist in Figur 4 noch einmal vergrößert und um 90° im Uhrzeigersinn gedreht wiedergegeben. Bei der hier dargestellten Ausführungsform des Eiskratzers 1 beträgt dessen Gesamtlänge b 240,4 mm, die Breite a im Bereich des Gehäusevorderendes 5 mit der Kratzkante 7 128,1 mm, die Breite c im Bereich des Gehäusehinterendes 6 62,1 mm, die Höhe e im Bereich des Gehäusehinterendes 6 26,8 mm und die Höhe d, gemessen zwischen der höchsten Stelle der Gehäuseoberseite 17, hier im Bereich der Anzeigeeinrichtung 16, und der Unterseite der Kratzkante 7 39,3 mm. Die seitliche Schnittansicht in Figur 3B (s. auch Fig. 4) zeigt, dass bei der hier dargestellten Ausführungsform die Gehäuseunterseite 18 in Richtung Kratzkante gewölbt ist. Darüber hinaus zeigt die Schnittansicht auch, dass der vordere Gehäuseabschnitt 3 gegenüber dem hinteren Gehäuseabschnitt 4 zur Gehäuseunterseite 18 hin bzw. in Richtung Kratzkante 7 abgewinkelt bzw. gekrümmt ist, hier um einen Winkel α von etwa 15° (Fig. 4).

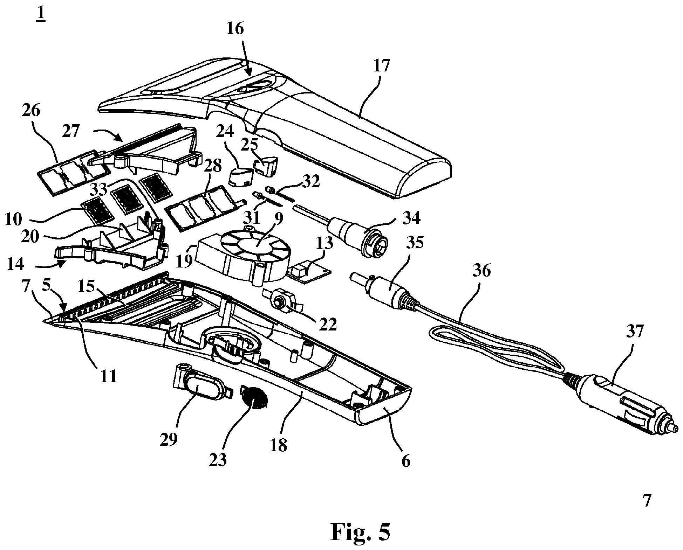

In Figur 5 ist eine Explosionszeichnung zu einer kabelbetriebenen Ausführungsform eines erfindungsgemäßen Eiskratzers 1. Gleiche Bezugsziffern kennzeichnen gleiche Vorrichtungsmerkmale wie in den vorherigen Darstellungen, so dass auch hier auf eine erneute Erläuterung von bereits bei der obigen Beschreibung einer batteriebetriebenen Ausführungsform eines erfindungsgemäßen Eiskratzers 1 berücksichtigten Komponenten verzicht wird. Anstelle von Batterien 12 ist zur Spannungsversorgung im hinteren Gehäuseabschnitt 4 eine Anschlussbuchse 34 für einen Verbindungsstecker 35 montiert, der über ein Kabel 36 mit einem Stecker 37 verbunden ist, der mit einer Bordspannungssteckdose eines Kraftfahrzeuges, hier einer 12V-Spannungssteckdose, verbindbar ist. In der Darstellung zu dieser Ausführungsform sind auch LEDs 31, 32 der Anzeigeeinrichtung 16 dargestellt.

## Patentansprüche

1. Tragbarer elektrisch beheizbarer Eiskratzer (1) zum Enteisen von Windschutzscheiben mit einem länglich ausgebildeten Gehäuse (2), das einen vorderen Gehäuseabschnitt (3) mit einem Gehäusevorderende (5) und einer dort angeordneten Kratzkante (7) und einen einen Griff (8) umfassenden hinteren Gehäuseabschnitt (4) mit einem Gehäusehinterende (6) umfasst, wobei in dem Gehäuse (2) ein elektrisch betriebener Lüfter (9) zum Erzeugen eines Luftstroms in Richtung der Kratzkante (7) und mindestens ein elektrisch betriebenes Heizelement (10) zum Erwärmen des Luftstroms angeordnet sind, und wobei der vordere Gehäuseabschnitt (3) und der hintere Gehäuseabschnitt (4) sich in Gehäuselängsrichtung im Wesentlichen in einer Ebene erstrecken oder der vordere Gehäuseabschnitt (3) gegenüber dem hinteren Gehäuseabschnitt (4) in Gehäuselängsrichtung in einem Winkel von nicht mehr als 35° abgewinkelt ist.

2. Tragbarer elektrisch beheizbarer Eiskratzer (1) nach Anspruch 1, wobei der vordere Gehäuseabschnitt (3) gegenüber dem hinteren Gehäuseabschnitt (4) in einem Winkel von nicht mehr als 30°, bevorzugt nicht mehr als 25° oder 20°, besonders bevorzugt nicht mehr als 15° abgewinkelt ist.

3. Tragbarer elektrisch beheizbarer Eiskratzer (1) nach Anspruch 1 oder 2, wobei der vordere Gehäuseabschnitt (3) sich in Richtung quer zur Gehäuselängsrichtung zur Kratzkante (7) hin erweitert.

4. Tragbarer elektrisch beheizbarer Eiskratzer (1) nach einem der vorhergehenden Ansprüche, wobei das Verhältnis von Gehäuselänge zu Gehäusehöhe im Bereich des hinteren Gehäuseabschnitts (4) ≥5, bevorzugt ≥6, ≥7, ≥8 oder ≥9 beträgt.

5. Tragbarer elektrisch beheizbarer Eiskratzer (1) nach einem der vorhergehenden Ansprüche, wobei die Kratzkante (7) eine Mehrzahl von Lüftungskanälen (11) zur Ableitung des Luftstroms aufweist.

6. Tragbarer elektrisch beheizbarer Eiskratzer (1) nach einem der vorhergehenden Ansprüche, wobei der Lüfter (9) ein Radiallüfter ist.

7. Tragbarer elektrisch beheizbarer Eiskratzer (1) nach einem der vorhergehenden Ansprüche, wobei das mindestens eine Heizelement (10) ein PTC-Heizelement ist.

8. Tragbarer elektrisch beheizbarer Eiskratzer (1) nach einem der vorhergehenden Ansprüche, wobei der Lüfter (9) und das mindestens eine Heizelement (10) mit mindestens einer in dem Gehäuse (2) angeordneten Batterie (12) elektrisch verbunden sind.

9. Tragbarer elektrisch beheizbarer Eiskratzer (1) nach einem der vorhergehenden Ansprüche, wobei der Lüfter (9) und das mindestens eine Heizelement (10) mit einem Kabel (36) elektrisch verbunden sind, das mittels eines Steckers (37) an eine Bordspannungssteckdose eines Kraftfahrzeuges anschließbar ist.

10. Tragbarer elektrisch beheizbarer Eiskratzer (1) nach einem der vorhergehenden Ansprüche, wobei in dem Gehäuse (2) eine Steuerelektronik (13) zur elektronischen Steuerung des Lüfters (9) und/oder des mindestens einen Heizelements (10) angeordnet ist.

11. Tragbarer elektrisch beheizbarer Eiskratzer (1) nach einem der vorhergehenden Ansprüche, wobei in dem Gehäuse (2) eine Führungseinrichtung (14) zur Führung des Luftstroms zur Kratzkante (7) angeordnet ist.

12. Tragbarer elektrisch beheizbarer Eiskratzer (1) nach einem der vorhergehenden Ansprüche, wobei in dem Gehäuse (2) zwischen dem mindestens einen Heizelement (10) und der Kratzkante (7) eine Barriere (15) gegen von der Kratzkante (7) aus eindringendes Wasser angeordnet ist.

13. Tragbarer elektrisch beheizbarer Eiskratzer (1) nach einem der vorhergehenden Ansprüche, wobei auf der Gehäuseoberseite eine Anzeigeeinrichtung (16) angeordnet ist, die eine ausreichende Temperatur des mindestens einen Heizelements (10) anzeigt.

14. Tragbarer elektrisch beheizbarer Eiskratzer nach einem der vorhergehenden Ansprüche, wobei die Kratzkante (7) lösbar mit dem vorderen Gehäuseabschnitt (3) verbunden ist.
